(19) Europäisches Patentamt
European Patent Office
Office européen des brevets

(11) **EP 4 625 982 A1**

(12) **EUROPEAN PATENT APPLICATION**

(43) Date of publication:
**01.10.2025 Bulletin 2025/40**

(21) Application number: **24305437.6**

(22) Date of filing: **25.03.2024**

(51) International Patent Classification (IPC):
**H04N 19/119** (2014.01)     **H04N 19/136** (2014.01)
**H04N 19/176** (2014.01)     **H04N 19/50** (2014.01)
**H04N 19/593** (2014.01)

(52) Cooperative Patent Classification (CPC):
**H04N 19/176; H04N 19/119; H04N 19/136;
H04N 19/50; H04N 19/593;** H04N 19/103;
H04N 19/70

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **RATH, Gagan Bihari**
  **35000 RENNES (FR)**
• **CHEN, Ya**
  **35700 RENNES (FR)**
• **URBAN, Fabrice**
  **35235 THORIGNE-FOUILLARD (FR)**
• **ROBERT, Antoine**
  **35140 MEZIERES SUR COUESNON (FR)**

(74) Representative: **Vossius & Partner
Patentanwälte Rechtsanwälte mbB
Siebertstraße 3
81675 München (DE)**

(54) **PIECEWISE PLANAR MODE FOR INTRA PREDICTION**

(57)     Systems and methods for improved planar prediction modes for video codecs, and particularly a piecewise planar mode to improve upon the normal planar mode in the case of large blocks. In some implementations, control pixels are selected on the top and left reference arrays at uniform intervals so that the parent block can be divided into equal sized smaller parts. In some implementations, each of these smaller parts may be predicted with the planar mode using the control pixels and reference samples, or in various implementations with the predicted samples in previously predicted causal parts. In some implementations, each prediction may be followed by a position dependent prediction combination (PDPC) process to maintain continuity at part boundaries. In some implementations, the final prediction can be optionally subjected to smoothing to further improve the continuity.

FIG. 6

## Description

### TECHNICAL FIELD

The present embodiments generally relate to systems and methods for media coding and compression.

### BACKGROUND

Many implementations of video coding systems use inter- and/or intra-frame prediction models to encode differences between frames or portion of frames (e.g. blocks or other regions). In particular, the Versatile Video Coding (VVC) and Enhanced Compression Model (ECM) codecs support several prediction modes for use in intra-frame predictions, including vertical, horizontal, direct current (DC), and planar prediction modes. Planar prediction mode may be particularly useful for image areas that have smooth or gradual content changes (e.g. gradients or smooth changes in luminance or color).

### SUMMARY

In some aspects, the present disclosure is directed to implementations of systems and methods for improved planar prediction modes for video codecs, and particularly a piecewise planar mode to improve upon the normal planar mode in the case of large blocks. In some implementations, control pixels are selected on the top and left reference arrays at uniform intervals so that the parent block can be divided into equal sized smaller parts or sub-blocks. In some implementations, each of these smaller parts or sub-blocks may be predicted with the planar mode using the control pixels and reference samples, or in various implementations with the predicted samples in previously predicted causal parts or sub-blocks. In some implementations, each prediction may be followed by a position dependent prediction combination (PDPC) process to maintain continuity at part boundaries. In some implementations, the final prediction can be optionally subjected to smoothing to further improve the continuity.

### BRIEF DESCRIPTION OF THE DRAWINGS

A more detailed understanding may be had from the following description, given by way of example in conjunction with the accompanying drawings, wherein like reference numerals in the figures indicate like elements, and wherein:

FIG. 1 illustrates a block diagram of an embodiment of video encoder in which various aspects of the embodiments may be implemented;

FIG.2 illustrates a block diagram of an embodiment of video encoder in which various aspects of the embodiments may be implemented;

FIG. 3 illustrates an example of vertical and horizontal interpolations in an implementation of planar mode prediction, according to some embodiments;

FIG. 4 illustrates an example of placement of control points or pixels along reference samples to subdivide a large block, in some embodiments;

FIG. 5A illustrates horizontal and vertical interpolations in a first portion of a method of piecewise planar mode for intra prediction, in some embodiments;

FIG. 5B illustrates horizontal and vertical interpolations in a second portion of the method of piecewise planar mode for intra prediction of FIG. 5A, in some embodiments;

FIG. 6 illustrates an example of piecewise planar mode for intra prediction utilizing a square block, according to some embodiments;

FIG. 7 is a flow chart of a method for piecewise planar mode for intra prediction, according to some embodiments; and

FIG. 8 illustrates a block diagram of a system within which aspects of the present embodiments may be implemented.

### DETAILED DESCRIPTION

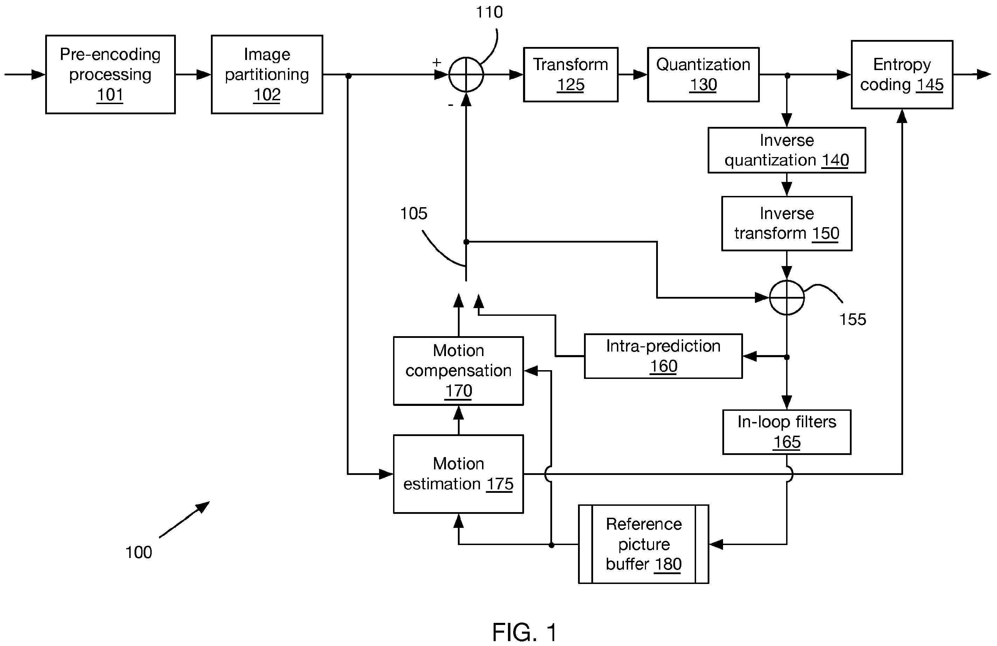

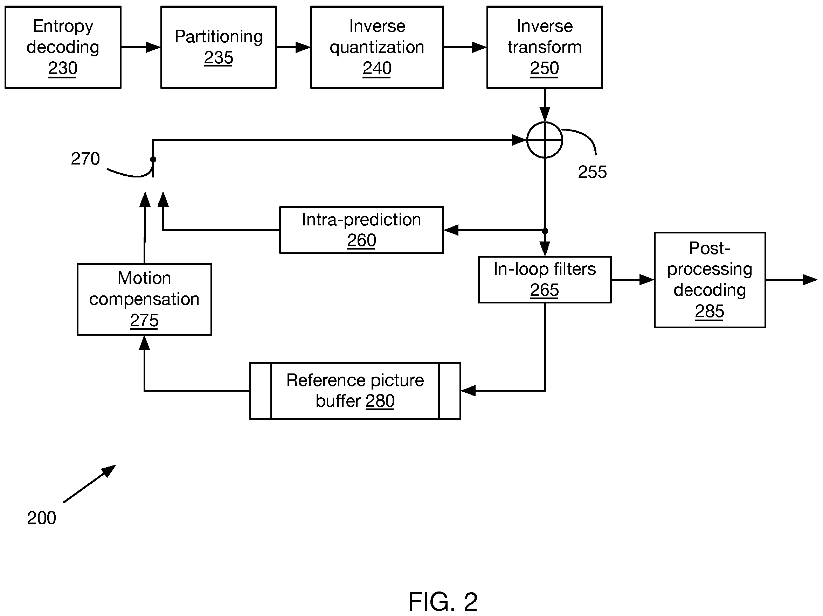

Various methods and other aspects described in this application can be used to modify modules, for example, the motion compensation (170, 275), motion estimation (175), entropy coding, intra (160, 260) and/or decoding modules (145, 230), of a video encoder 100 and decoder 200 as shown in FIG. 1 and FIG. 2. Moreover, the present aspects are not limited to WC or HEVC, and can be applied, for example, to other standards and recommendations, whether pre-existing or future-developed, and extensions of any such standards and recommendations (including WC and HEVC). Unless indicated otherwise, or technically precluded, the aspects described in this application can be used individually or in combination.

Various numeric values are used in the present application, for example. The specific values are for example purposes and the aspects described are not limited to these specific values.

FIG. 1 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

FIG. 2 illustrates a block diagram of a video decoder 200. In the decoder 200, a bitstream is decoded by the decoder elements as described below. Video decoder 200 generally performs a decoding pass reciprocal to the encoding pass as described in FIG. 1 . The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

In some implementations of VVC and ECM codecs, encoding of a frame of video sequence may be based on a quad-tree (QT), binary tree (BT), and/or triple tree (TT) block structure. For example, a frame may divided into non-overlapping square coding tree units (CTUs) which all undergo QT/BT/TT-based splitting to multiple coding units (CUs) based on rate-distortion criteria. In intra-prediction, a CU may be spatially predicted from the causal neighbor CUs, for example, the decoded CUs to the top and the left of the CU, using different prediction modes. The planar and DC modes aim to model slowly changing intensity areas, while directional prediction modes (e.g. vertical, horizontal, etc.) aim to model directional structures in a frame.

In some implementations, a planar mode prediction may be obtained by taking the average of a horizontal interpolation and a vertical interpolation irrespective of the target block size. For example, in some ECM codecs, the individual horizontal and vertical interpolations are considered as possible prediction modes besides the normal planar mode. When a target block has large size, these modes can be inefficient leading to smaller blocks, which in turn needs additional signaling and encoding complexity.

To address this and other problems, in some implementations, a piecewise planar mode may be utilized in addition to the above discussed prediction modes. Such a prediction mode may be particularly effective for large block sizes to increase coding and compression efficiency.

Before turning to implementations of piecewise planar modes, it may be helpful to briefly review planar mode predictions as used in VVC and ECM 10.0. The terms "CU" and "block" may be used interchangeably.

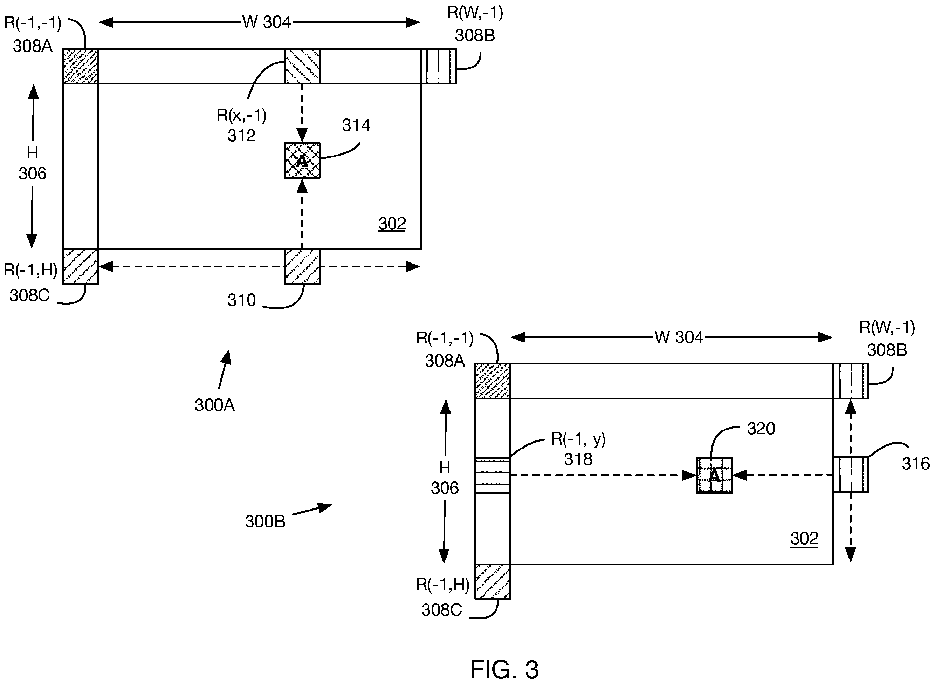

In some implementations, a planar prediction may be constructed using the average of a horizontal and a vertical interpolation, as shown in FIG. 3. Specifically, FIG. 3 shows an illustration of an example of vertical 300A and horizontal 300B interpolations in an implementation of planar mode prediction for VVC. As shown, a block or region of pixels 302 may have a width W 304 and a height H 306. The block of pixels may be bounded by pixels from neighboring blocks which may be used as references for interpolation. For example, and assuming a coordinate of 0,0 for the upper-leftmost pixel of the block 302, an upper-left reference pixel 308A may be found at coordinate -1,-1; an upper-right reference pixel 308B may be found at coordinate W,-1 (with W being the width in pixels of the block 302); and a lower-left reference pixel 308C may be found at coordinate -1,H (with H being the height in pixels of the block 302). Note that in many implementations, blocks may not begin with absolute coordinates of 0,0 in the upper-left pixel, such as where a frame is divided into multiple blocks. Accordingly, the coordinates shown may be considered as relative coordinates (i.e. relative to the upper left corner of the block 302). Other reference pixels may be used in other implementations, such as top-center reference pixels, left-center reference pixels, or pixels to the right or bottom (e.g. in implementations in which frames are rendered or processed in a direction other than from top to bottom and left to right).

As discussed above, rather than encoding all of the pixels within the block (which may require significant amounts of storage or bandwidth), pixels may be predicted or estimated based on interpolations of the neighboring reference pixels. In planar mode prediction, the average value of the two interpolations gives the initial prediction in planar mode, specifically a horizontal interpolation and vertical interpolation. The horizontal and vertical interpolations also constitute the horizontal planar and vertical planar predictions in ECM codec implementations.

Referring first to the vertical interpolation 300A, a pixel value 314 on a column x (e.g. pixel "A") is linearly interpolated using the top reference sample R(x,-1) 312 (i.e. a pixel in the top-neighboring block having a corresponding x coordinate, and a y coordinate of -1 or one pixel above the top border of the block 302 and along the bottom row of the neighboring block), and the bottom-left reference sample R(-1,H) 308C (shown "virtually" shifted over as reference pixel 310 for explanation purposes). For vertical interpolations of other pixels (at other x coordinates), the same reference sample 308C may be used with other corresponding reference samples (at the same x coordinate) from the top-neighboring block.

Similarly, in the horizontal interpolation 300B, a pixel value 320 on a row y (e.g. pixel "A") is linearly interpolated using the left reference sample R(-1,y) 318 (i.e. a pixel in the left-neighboring block having a corresponding y coordinate, and a y coordinate of -1 or one pixel left of the left border of the block 302 and along the right column of the neighboring block) and the top-right reference sample R(W,-1) 308B (shown "virtually" shifted over as reference pixel 316 for explanation purposes).

Each of the vertical and horizontal interpolations may be calculated in any suitable manner, such as via the average of RGB or YCbCr pixel values, a weighted average or logarithm average, or any other suitable calculation. For example, in some implementations, a linear interpolation or polynomial interpolation may be used to find the pixel value between the reference samples.

The average of these two interpolations may be used as the first prediction in planar mode using the following equations:

$$P_v(x,y) = \big((H - 1 - y) * R(x, -1) + (y + 1) * R(-1, H)\big) \qquad (1)$$

$$P_h(x,y) = \big((W - 1 - x) * R(-1, y) + (x + 1) \cdot R(W, -1)\big) \qquad (2)$$

$$P(x,y) = ((P_v(x,y) << log_2W + (P_h(x,y) << log_2H) + W * H) >> (log_2W + log_2H + 1) \qquad (3)$$

Subsequently, in some implementations, the first predicted values are processed with position-dependent intra prediction (PDPC) to smooth out the discontinuities with the top and left reference arrays. For example, one or more reference samples are external to the current block may be selected based on a wide angle intra-prediction mode, and a modified prediction sample may be calculated as a weighted sum of the interpolated value and the selected reference samples:

$$P(x,y) = (w_L * R(-1,y) + w_T * R(x,-1) + (64 - w_L - w_T) * P(x,y) + 32) >> 6 \qquad (4)$$

where,

$$w_T = 32 \gg \big((y \ll 1) \gg scale\big),$$

$$w_L = 32 \gg \big((x \ll 1) \gg scale\big),$$

$$scale = (log_2(W) + log_2(H) - 2) \gg 2.$$

Since the weights $w_T$ and $w_L$ are decreasing functions of y and x, respectively, only a few rows at the top and a few columns on the left of the block are affected by the PDPC process depending on the scale value. The remaining values remain unchanged as in the first prediction step.

In ECM, the horizontal and vertical interpolations have also been adopted as horizontal planar and vertical planar modes. Normalizing the interpolations given above, they are derived as:

*P(x,y) = ((H - 1 - y) \* R(x, -1) + (y + 1) \* R(-1,H) + H/2) >> log$_2$H,* for vertical Planar

*P(x,y) = ((W -1 -x) \* R(-1,y) + (x+1) • R(W,-1) + W/2) >> log$_2$W,* for horizontal Planar

Like the normal planar, the first predicted values are subsequently processed with PDPC in the same manner as given above.

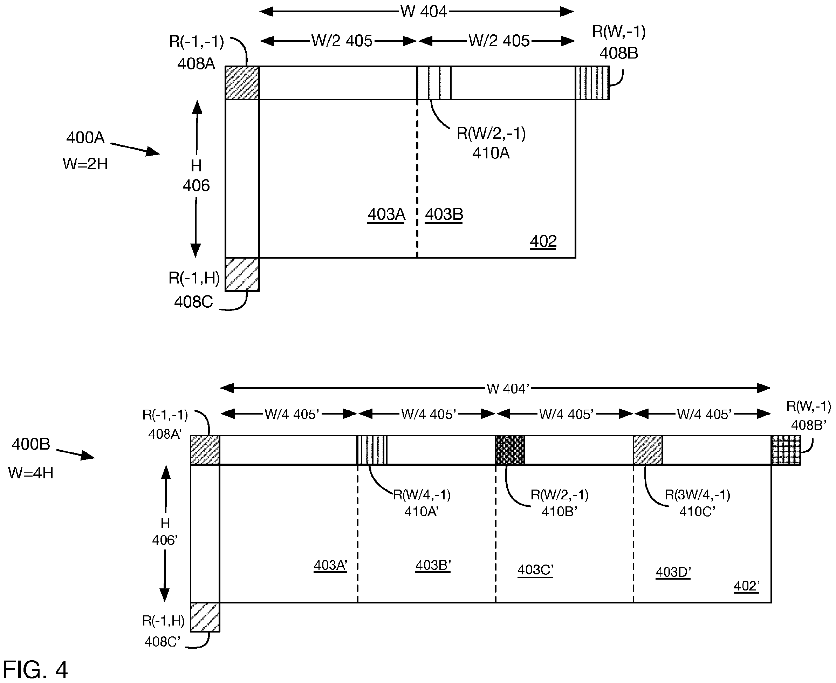

In implementations of piecewise planar prediction, a large block may be divided into many smaller sub-blocks or portions and planar prediction may be performed for each part or sub-block, maintaining smoothness at part or sub-block boundaries, for example if a width and/or a height of the block exceeds a threshold or scale value. The following discussion presents two examples of piecewise planar predictions that can be incorporated in intra prediction; however, other piecewise planar predictions may be performed in various implementations. For example, rectangular target blocks 402, 402' having their widths W 404, 404' larger than their heights H 406, 406' are presented as shown in 400A, 400B of FIG. 4. Specifically, referring first to 400A, illustrated is block 402 with width W 404, height H 406, and W=2H (i.e. the block is twice as wide as it is tall). Initial reference samples or control pixels are identified to the upper left R(-1,-1) 408A, upper right R(W-1) 408B, and lower left R(-1,H) 408C. Similarly, 400B illustrates a block 402' with width W 404', height H 406', and W=4H. Initial reference samples or control pixels are identified to the upper left R(-1,-1) 408A', upper right R(W-1) 408B', and lower left R(-1,H) 408C'.

In the first step, K control points or pixels may be identified on the larger side of the block, where K = (W/H - 1) when W > H, or K = (H/W - 1), when W < H. The control pixels are placed at a separation of H pixels on the top reference array when W > H, or at a separation of W pixels on the left reference array when H > W. For example, as shown in 400A, one additional control pixel or control point 410A is identified at R(W/2,-1). In 400B, three additional control pixels or control points are identified at R(W/4,-1) (410A'); R(W/2,-1) (410B'); R(3W/4,-1) (410C'). In VVC and ECM, the sides of a target blocks have dyadic lengths, that is, their lengths are powers of two. Therefore, when W > H, $W = 2^i {}_* H,$ where $i$ = 1,2, ... 5, for the minimum and maximum lengths of 4 and 128 pixels, as defined in VVC and ECM. These additional control pixels or control points break each block into equal sized sub-blocks or portions. For example, in 400A, block 402 is split into sub-blocks 403A, 403B, each with height H 406 and width W/2 405. In 400B, block 402' is split into sub-blocks 403A'-403D', with height H 406' and width W/4 405'.

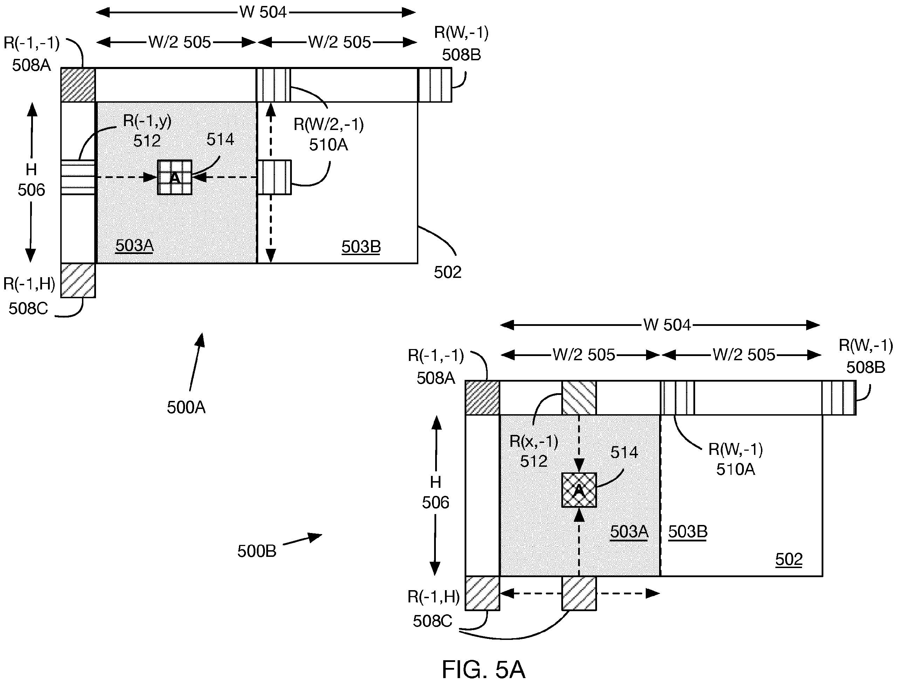

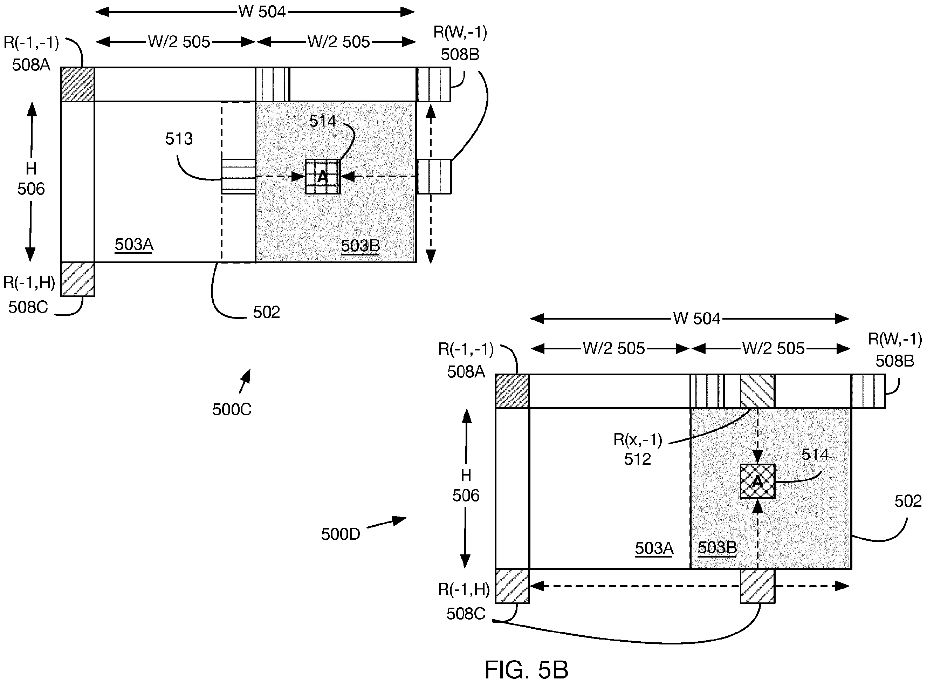

Pixel estimation and interpolation may then be performed by sub-blocks. For example, pixels in the first part of the block (first sub-block, shown lightly shaded) may be predicted, followed by pixels in the next part or sub-block (utilizing the newly estimated or interpolated pixels as new reference pixels). For example, FIGs. 5A and 5B illustrate prediction by horizontal and vertical interpolation on a sub-block basis. Starting with FIG. 5A and 500A, block 502 with width W 504 and height H 506 is divided into virtual sub-blocks 503A, 503B (generally sub-block(s) 503) with widths W/2 505 and heights H 506. Initial control points 508A-508C are identified to the upper left, upper right, and lower left, respectively. An additional control point 510A is identified at R(W/2,-1). Using the left reference samples along R(-1,y) 512 and the additional control pixel R(W/2,-1) 510A, a horizontal interpolation is performed as in Eq. (2) above to predict internal pixel 514 (labeled "A") (with additional control pixel 510A shown virtually shifted down into horizontal alignment).

Similarly, as shown in 500B, using the reference samples on top between the top left reference sample 508A and the additional control pixel 510A (that is, reference samples R(x,-1) 512 for 0 ≤ x < W/2), and the bottom-left reference sample (508C) (shown virtually shifted into vertical alignment), a vertical interpolation 500B is performed as in Eq. (1) to predict pixel 514. In some implementations, the width parameter W in Eq. (1) and Eq. (2) may be replaced by the height parameter H to correspond to the width of the first part or sub-block. These two interpolations are then added with weights (e.g. 0.5) to obtain the initial prediction in the first part or sub-block of the block. Then in some implementations, a PDPC process is applied to the initial prediction to complete the prediction. The process is similar to the usual planar prediction modes except that the first control pixel at distance H (or W/2 in 500A, 500B) is used instead of the top-right reference sample at distance W.

Next, in some implementations as shown in the example illustration of FIG. 5B, the pixels in the second part of the block (second sub-block, shown lightly shaded) may be predicted. As shown in 500C, using the predicted samples (R(W/2 -1,y) 513 on the last column of the first sub-block 503A and the control pixel 508B (which is the same as the top-right reference sample 508B in FIG. 5A and is shown virtually shifted down into horizontal alignment), a horizontal interpolation is performed using Eq. (2) to estimate pixel 514. Similarly, in 500D, using the top-neighboring reference samples from the first control pixel 510A up to the control pixel 508B (i.e. R(x,-1) 512 with $W/2 \leq x < W$), and the bottom left reference sample 508C (shown virtually shifted right into vertical alignment), a vertical interpolation is performed as in Eq. (1) to estimate pixel 514. These two interpolations are then added with weights (e.g. 0.5) to obtain the initial prediction in the second part or sub-block of the block. Then a PDPC process may be applied to the initial prediction to complete the prediction.

This process may be repeated until the last sub-block 503 or portion of the block 502 is predicted. In many implementations of the PDPC process at each step, the reference samples used are the same as used for the vertical and horizontal interpolations for the current part or sub-block, which may reduce memory buffer usage or eliminate repeatedly having to load new reference samples into a reference sample buffer. Furthermore, in many implementations, the scale parameter in PDPC may be calculated using the height and width of the current part or sub-block rather than of the parent block.

For the cases when the height is longer than the width, the prediction method is analogous, but with the iteration of sub-blocks and control points rotated and proceeding vertically (e.g. downwards). A generalized version is also discussed below, with a block having a square shape.

In order that the prediction process does not give rise to discontinuities at the boundaries between the predictions in adjacent parts or sub-blocks that can lead to high frequency components in the prediction residual, some smoothing may be performed. For example, the goal of the PDPC process performed after the initial prediction in each part or sub-block is to avoid these discontinuities. In other implementations, a smoothing operation may be performed in which the predictions in two sub-blocks are blended with weights to obtain the final prediction. This smoothing process can be optionally added at the end of the prediction.

In many implementations, the prediction of parts or sub-blocks is performed sequentially, but the decoding of the parts or sub-blocks maybe performed in parallel. The prediction for the whole block is obtained after the prediction of the last part or sub-block in the sequence is finished. At the encoder, this prediction may be subtracted from the original pixels in the whole block to obtain the residual for the whole block, which may then undergo transform coding, quantization, coefficient coding and CABAC coding in the encoding chain. The transform sizes and other parameters are adapted to the CU size and not the sizes of the individual parts or sub-blocks. At the decoder, the prediction process for the CU is the same as in encoder, that is, the parts or sub-blocks of a CU are predicted sequentially and the prediction for the whole block is obtained after the prediction of the last part or sub-block in the sequence is finished. This prediction is added to the decoded residual values for the whole CU.

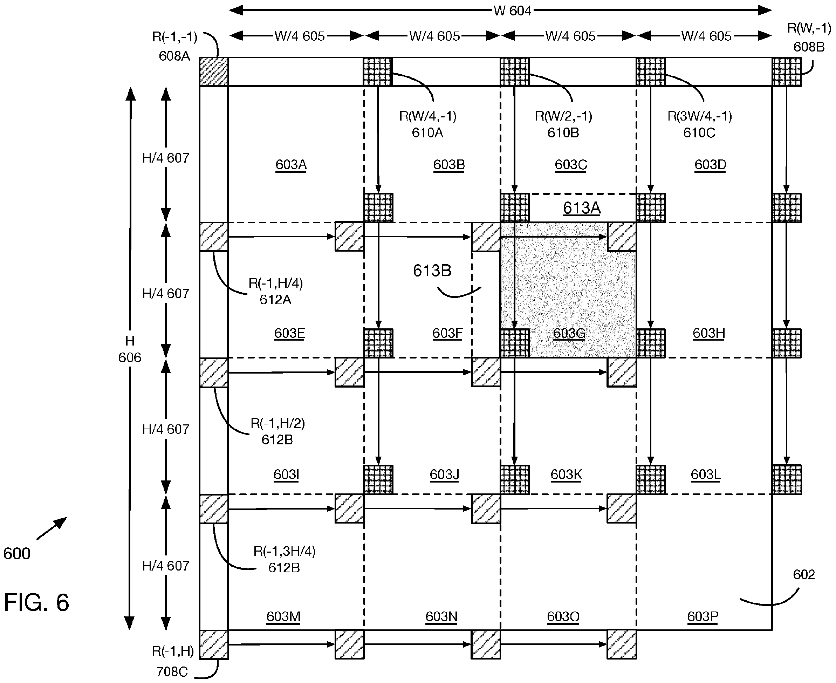

Implementations of piecewise planar prediction can be generalized to any target block size as follows. The control pixels are chosen both on the left and top reference arrays at regular intervals. Using these control pixels, and the bordering reference array samples or the predicted samples in previously predicted causal parts or sub-blocks, the current part or sub-block is predicted followed by the PDPC process. This is shown in illustration 600 of FIG. 6 for a square block 602, which can be generalized to a rectangular block as well. The block 602 having width W 604 and height H 606 (and W=H) may divided based on a selected size or scale, e.g. into sub-blocks 603A-603P (generally sub-blocks 603) having width W/4 605 and height H/4 (607) (which are equal, as shown). Additional control points or pixels are determined along the top border at R(W/4, -1) 610A; R(W/2, -1) 610B; and R(3W/4, -1) 610C; and along the left border at R(-1,H/4) 612A; R(-1,H/2) 612B; and R(-1,3H/4) 612B (generally control pixels 610, 612).

In the illustration 600, pixels of the shaded sub-block or portion 603G may be predicted using the top-right control pixel copied from the top reference array, R(3W/4, -1) 610C, the bottom-left control pixel copied from the left reference array, R(-1, H/2) 612B, and the predicted samples in the last row (613A) of the top part or sub-block 603C and the predicted samples in the last column (613B) of the left part or sub-block 603F. In the illustration, the raster scan order of the parts or sub-blocks for prediction proceed from the left to right and top to bottom, so that the top and left parts or sub-blocks are already predicted. However, in other implementations, other raster scan orders may be used, and different neighboring reference samples may be utilized.

After the last part or sub-block has been predicted, a blending operation can be optionally carried out to improve the smoothness at the sub-block boundaries.

In another implementation, instead of repeating the control pixels on the right and bottom of a part or sub-block, the bottom-right pixel value of the part or sub-block may first be estimated using a weighted sum of the control pixels. Then the pixels on the right of the considered part or sub-block may be estimated using linear interpolation or any other method using the top-right control pixel and the estimated bottom-right pixel. Similarly, the pixels at the bottom of the considered part or sub-block may be estimated using linear interpolation or any other method using the bottom-left control pixel and the estimated bottom-right pixel. The horizontal interpolation may utilize the estimated pixels on the right side and the predicted pixels, or the reference pixels, on the left side. Similarly, the vertical interpolation may utilize the estimated pixels at the bottom and the predicted pixels, or the reference pixels, on the top. These two interpolations may be averaged to get the initial prediction which may then be followed by a PDPC step for smoothing.

In intra sub-partition (ISP) coding, the current block can be split in two or four sub-partitions or sub-blocks which are predicted using the same prediction mode, that is, the prediction mode of the CU. In case the prediction mode of the CU is planar, each sub-partition or sub-block is predicted with planar mode. The sub-partitions or sub-blocks are processed in sequential order, that is, each sub-partition or sub-block is predicted using its own reference samples, then the decoded residual for the sub-partition or sub-block is added to the prediction to decode the pixels in the sub-partition or sub-block. The decoded pixels on the last row or last column are used as reference pixels for the prediction of the next sub-partition or sub-block in the case of vertical or horizontal splits, respectively. By contrast, in many implementations of piecewise planar mode, two or multiple parts or sub-blocks of a CU are predicted in the same manner as planar with control pixels located with the reference samples of a CU. The parts or sub-blocks may use predicted samples in the previous causal parts or sub-blocks and control pixels on the CU reference arrays for planar interpolations. After the whole CU is predicted, the decoded residual for the CU may be added to the prediction to reconstruct the CU. In ISP, since the sub-partitions are decoded sequentially, the transform parameters for the residual in the sub-partitions are adapted to the size of a sub-partition. In implementations of piecewise planar mode, the prediction of the whole CU may be done by predicting the parts or sub-blocks sequentially, but the transform parameters are adapted to the parent CU size as the residual is computed for the parent CU.

In ISP, the *ISPmode* flag is encoded to indicate if a block needs to be split and if yes, which type of split (vertical or horizontal) to apply. In implementations of piecewise planar mode, the usage of the piecewise planar can be signaled with additional bits. However, the splitting of the block with control pixels can be implicitly understood based on the block shape and size.

The following example implementations of piecewise planar mode are based on a video codec that includes intra prediction with block-based CU partitions and supporting the planar mode for intra prediction, for example, a codec based on HEVC, VVC, or ECM standard, etc.

In a first example implementation, piecewise planar mode may be included as another non-angular mode besides the existing planar and DC modes. This new planar mode is available for larger blocks, which may be measured with two parameters or size thresholds (e.g. planar_min_block_width and planar_min_block_height). In many such implementations, all blocks having their width greater than or equal to the planar_min_block_width or their height longer than or equal to the planar_min_block_height can utilize the new planar prediction mode besides the existing planar modes. For smaller blocks not meeting the above size constraint, in some implementations, piecewise planar mode may be disabled or only the existing planar modes may be used. The encoder may check the rate-distortion (R/D) performance of the new mode, and if it is found to have the best performance among all applicable intra prediction modes, may signal its usage with additional bits. As the new mode is enabled only for large blocks, the intra sub-partitions (ISP) prediction is disabled in this case. Therefore, if the decoded *ISPmode* flag is non-zero (that is, *ISPmode* is either '1' meaning horizontal split, or is '2' meaning vertical split), the normal planar mode is assumed. Similar to the existing planar modes, the new planar mode may use the first reference line, that is, the reference arrays immediately on top and left of a target block.

In another example implementation, piecewise planar mode may be used in place of the normal planar mode for blocks satisfying the size constraint, that is, whenever the block width is greater than or equal to the planar_min_block_width or the block height is longer than or equal to the planar_min_block_height. In such implementations, it is also assumed that there is no intra sub-partitions (ISP) prediction. If the *ISPmode* is decoded to be nonzero (that is, either horizontal or vertical sub-partitions), the normal planar mode is assumed, else the new planar mode is used provided the size constraint is satisfied, whenever the decoder decodes the mode to be planar. Furthermore, the new planar mode may use the first reference line as discussed above.

In another example implementation, piecewise planar mode may be included as another non-angular mode besides the existing planar and DC modes, but the signaling of the new planar mode may not be done explicitly. Both the encoder and the decoder use templates as used in template-based intra mode derivation (TIMD) to decide between the normal planar and piecewise planar. For piecewise planar, a template consisting of decoded samples on top and on left of a target block may also be divided into parts or sub-blocks for piecewise planar mode. The computed sum of absolute transformed differences (SATD) or sums of absolute differences (SAD) score may be used to determine whether to use the normal planar or the new piecewise planar mode. As in the above example implementations, ISP coding may not be used simultaneously with piecewise planar prediction modes.

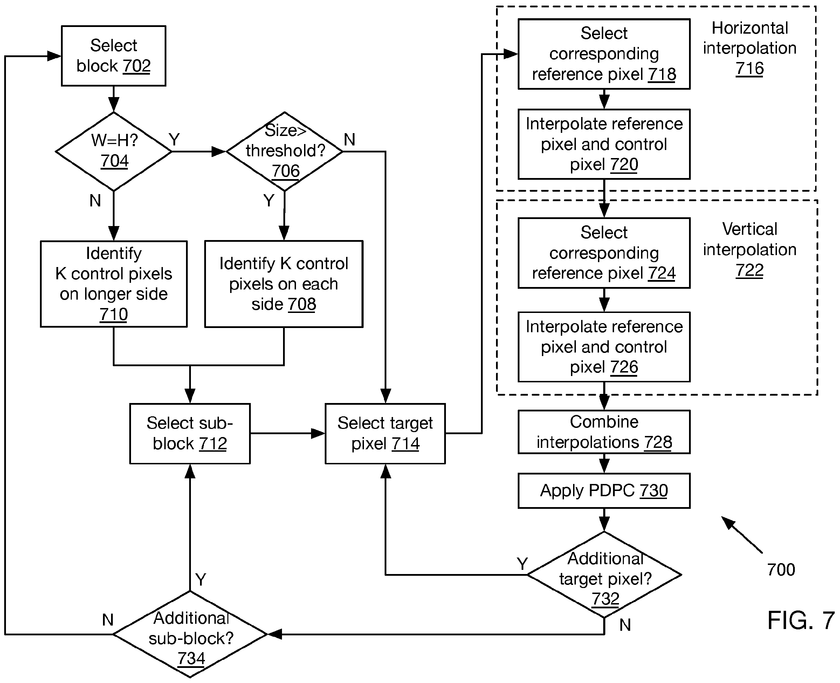

FIG. 7 is a flow chart of a method 700 for piecewise planar mode for intra prediction, according to some embodiments. At 702, in some implementations, an encoder or decoder (referred to generally as a codec) may select a block for piecewise planar mode. In many implementations, blocks may be portions of a frame or units of a coding tree. As discussed above, the codec may have many intra prediction modes available, and may select piecewise planar mode based on, for example, the size of the block, the homogeneity of the block, one or more cost functions, or any other method of selecting a block for planar mode prediction.

At 704, in some implementations, the codec may determine if the block is square or if a width of the block is equal to a height of the block. If so, then in some implementations at 706, the codec may determine if the block size exceeds a threshold size or is a multiple of a predetermined block size (e.g. if $W = H$ and $W = 2^i * [threshold\ size]$) with $i \geq 1$. If so, at 708, the block may be divided into a plurality of sub-blocks by identifying K additional control pixels, with K = W/[*threshold size*] - 1. For example, if the block is 64 pixels and the sub-blocks are 16 pixels, then there would be 3 additional control pixels selected along the top border, at positions of (W/4,-1), (W/2,-1), and (3W/4,-1) as discussed above. Similarly, additional control pixels or points may be selected along the left border, at positions of (-1,H/4), (-1,H/2), and (-1,3H/4). If the block is not larger than the threshold size, then in some implementations the method may skip to 714 and non-piecewise planar mode prediction may be performed.

If the block is rectangular, then in some implementations at 710, the block may be divided into a plurality of sub-blocks by identifying K additional control pixels along the longer side of the block, where K = (W/H - 1) when W > H, or K = (H/W - 1), when W < H. For example, if the block is 64 pixels in width and 16 pixels in height, then 3 additional control pixels may be selected along the top border, at positions of (W/4,-1), (W/2,-1), and (3W/4,-1) as discussed above in connection with FIG. 4.

At 712, the codec may select a sub-block from the plurality of sub-blocks. In many implementations, based on the raster scan method utilized, the codec may select the top-left most sub-block of the sub-blocks for initial prediction. In other implementations, other scan directions may be used.

At 714, in some implementations, the codec may select a target pixel for prediction within the sub-block. The pixel selected may be a top-left pixel, for example, or a pixel at 0,0 within the sub-block, or any other starting pixel.

At 716, in some implementations, the codec may perform horizontal interpolation. The interpolation may comprise selecting a neighboring reference pixel at 718 (e.g. a pixel on the right border of the left neighboring sub-block in the same row as the target pixel, in some implementations). At 720, an interpolation may be calculated between the neighboring reference pixel and a control pixel on the edge orthogonal to the neighboring reference pixel (e.g. the upper right control pixel for a reference pixel on the left border, etc.). The interpolation may comprise a linear interpolation, an average of RGB or YCbCr values, or any other such interpolation between the reference pixel and control pixel.

At 722, the codec may perform vertical interpolation. The interpolation may comprise selecting a neighboring reference pixel at 724 (e.g. a pixel on the bottom border of the top neighboring sub-block in the same column as the target pixel, in some implementations). At 726, an interpolation may be calculated between the neighboring reference pixel and a control pixel on the edge orthogonal to the neighboring reference pixel (e.g. the lower left control pixel for a reference pixel on the top border, etc.). The interpolation may comprise a linear interpolation, an average of RGB or YCbCr values, or any other such interpolation between the reference pixel and control pixel. In some implementations, the vertical interpolation may use a different type of interpolation than the horizontal interpolation.

At 728, the codec may combine the horizontal and vertical interpolations. In some implementations, the interpolations may be combined as a weighted sum or average. In some implementations, the weights may be equal (e.g. 0.5), while in other implementations, the weights may be unequal. For example, in some implementations, the weights maybe based on a ratio between the distances of the target pixel to the reference pixels and/or control pixels used for horizontal or vertical interpolation. At 730, in some implementations, the codec may apply position dependent prediction combination (PDPC) and/or other smoothing or post-processing algorithms.

At 732, the codec may determine whether there are additional target pixels in the sub-block. If so, 714-732 may be repeated iteratively for each additional pixel. If not, at 734, the codec may determine whether there are additional sub-blocks in the block. If so, 712-734 may be repeated iteratively for each additional sub-block (and pixels in those sub-blocks). 702-734 may be repeated for each additional block in the frame.

Accordingly, implementations of the systems and methods discussed herein provide improved planar prediction modes for video codecs, and particularly a piecewise planar mode to improve upon the normal planar mode in the case of large blocks. In some implementations, control pixels are selected on the top and left reference arrays at uniform intervals so that the parent block can be divided into equal sized smaller parts or sub-blocks. In some implementations, each of these smaller parts or sub-blocks may be predicted with the planar mode using the control pixels and reference samples, or in various implementations with the predicted samples in previously predicted causal parts or sub-blocks.

In a first aspect, the present disclosure is directed to a method of video coding. The method includes selecting, by a codec of a device, a block of pixels of a frame of video, the block having a width W and a height H. The method also includes identifying, by the codec, a plurality of control points along a first edge of the block of pixels. The method also includes determining, by the codec, one or more pixels of a first portion of the block of pixels based on interpolations of a first control point of the plurality of control points along the first edge of the block of pixels with corresponding samples along a second edge of the block of pixels, the second edge orthogonal to the first edge. The method also includes determining, by the codec, one or more pixels of a second portion of the block of pixels different from the first portion based on interpolations of a second control point of the plurality of control points along the first edge of the block of pixels with corresponding samples along a third edge of the first portion of the block of pixels, the third edge parallel to the second edge.

In some implementations, the interpolations of the first control point of the plurality of control points along the first edge of the block of pixels with corresponding samples along the second edge of the block of pixels comprise horizontal and vertical interpolations. In some implementations, the interpolations of the second control point of the plurality of control points along the first edge of the block of pixels with the corresponding samples along the third edge of the first portion of the block of pixels comprise horizontal and vertical interpolations.

In some implementations, the corresponding samples along the third edge of the first portion of the block of pixels are within the first portion of the block of pixels and adjacent to the second portion of the block of pixels.

In some implementations, the method includes identifying, by the codec, a plurality of control points along the second edge of the block of pixels. The method also includes determining, by the codec, one or more pixels of a third portion of the block of pixels based on interpolations of a first control point of the plurality of control points along the second edge of the block of pixels with corresponding samples along the first edge of the block of pixels. The method also includes determining, by the codec, one or more pixels of a fourth portion of the block of pixels different from the third portion based on interpolations of a second control point of the plurality of control points along the second edge of the block of pixels with corresponding samples along a fourth edge of the third portion of the block of pixels, the fourth edge parallel to the first edge. In a further implementation, the width W of the block equals the height H of the block, and a number of the plurality of control points along the first edge of the block of pixels is equal to a number of the plurality of control points along the second edge of the block of pixels. In another further implementation, the width W of the block exceeds the height H of the block, and a number of the plurality of control points along the first edge of the block of pixels is proportional to a ratio of the width W to the height H.

In some implementations, determining the one or more pixels of the first portion of the block of pixels further comprises determining a weighted sum of a first interpolation and a second interpolation.

In another aspect, the present disclosure is directed to a video encoder or decoder configured to perform any of the implementations discussed above. In another aspect, the present disclosure is directed to a media consumption device configured to perform any of the implementations discussed above. In another aspect, the present disclosure is directed to at least one processor operatively connected to at least one transceiver, the at least one processor and at least one transceiver configured to perform any of the implementations discussed above. In another aspect, the present disclosure is directed to a network device configured to perform any of the implementations discussed above. In another aspect, the present disclosure is directed to a computing device configured to perform any of the implementations discussed above. In another aspect, the present disclosure is directed to an integrated circuit configured to perform any of the implementations discussed above. In another aspect, the present disclosure is directed to a non-transitory computer readable medium comprising instructions which when executed by a processing device cause the processing device to perform any of the implementations discussed above.

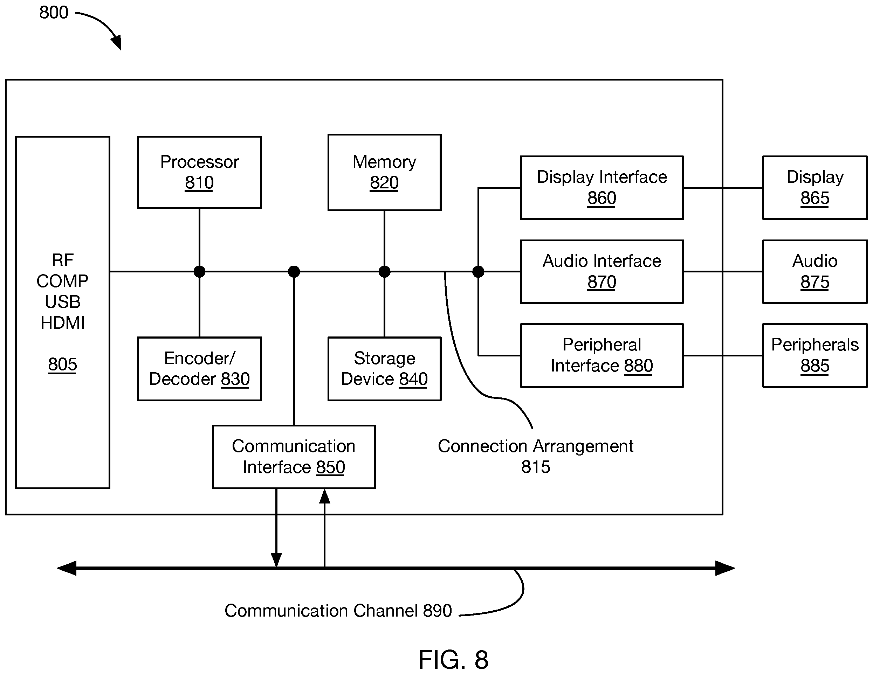

Having discussed various embodiments of the systems and methods discussed herein, it may be helpful to briefly describe an electronic device or computing environment in which these systems and methods may be implemented. FIG. 8 illustrates a block diagram of an example of a system in which various aspects and embodiments can be implemented. System 800 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 800, singly or in combination, may be embodied in a single integrated circuit, multiple ICs, and/or discrete components. For example, in at least one embodiment, the processing and encoder/decoder elements of system 800 are distributed across multiple ICs and/or discrete components. In various embodiments, the system 800 is communicatively coupled to other systems, or to other electronic devices, via, for example, a communications bus or through dedicated input and/or output ports. In various embodiments, the system 800 is configured to implement one or more of the aspects described in this application.

The system 800 includes at least one processor 810 configured to execute instructions loaded therein for implementing, for example, the various aspects described in this application. Processor 810 may include embedded memory, input output interface, and various other circuitries as known in the art. The system 800 includes at least one memory 820 (e.g., a volatile memory device, and/or a non-volatile memory device). System 800 includes a storage device 840, which may include non-volatile memory and/or volatile memory, including, but not limited to, EEPROM, ROM, PROM, RAM, DRAM, SRAM, flash, magnetic disk drive, and/or optical disk drive. The storage device 840 may include an internal storage device, an attached storage device, and/or a network accessible storage device, as non-limiting examples.

System 800 includes an encoder/decoder module 830 configured, for example, to process data to provide an encoded video/3D object or decoded video/3D object, and the encoder/decoder module 830 may include its own processor and memory. The encoder/decoder module 830 represents module(s) that may be included in a device to perform the encoding and/or decoding functions. As is known, a device may include one or both of the encoding and decoding modules. Additionally, encoder/decoder module 830 may be implemented as a separate element of system 800 or may be incorporated within processor 810 as a combination of hardware and software as known to those skilled in the art.

Program code to be loaded onto processor 810 or encoder/decoder 830 to perform the various aspects described in this application may be stored in storage device 840 and subsequently loaded onto memory 820 for execution by processor 810. In accordance with various embodiments, one or more of processor 810, memory 820, storage device 840, and encoder/decoder module 830 may store one or more of various items during the performance of the processes described in this application. Such stored items may include, but are not limited to, the input video/3D object, the decoded video/3D object or portions of the decoded video/3D object, the bitstream, matrices, variables, and intermediate or final results from the processing of equations, formulas, operations, and operational logic.

In several embodiments, memory inside of the processor 810 and/or the encoder/decoder module 830 is used to store instructions and to provide working memory for processing that is needed during encoding or decoding. In other embodiments, however, a memory external to the processing device (for example, the processing device may be either the processor 810 or the encoder/decoder module 830) is used for one or more of these functions. The external memory may be the memory 820 and/or the storage device 840, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for coding and decoding operations, such as for instance MPEG-2, HEVC, or 1C.

The input to the elements of system 800 may be provided through various input devices as indicated in block 805. Such input devices include, but are not limited to, (i) an RF portion that receives an RF signal transmitted, for example, over the air by a broadcaster, (ii) a composite input terminal, (iii) a USB input terminal, and/or (iv) an HDMI input terminal.

In various embodiments, the input devices of block 805 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 800 to other electronic devices across USB and/or HDMI connections. It is to be understood that various aspects of input processing, for example, Reed-Solomon error correction, may be implemented, for example, within a separate input processing IC or within processor 810 as necessary. Similarly, aspects of USB or HDMI interface processing may be implemented within separate interface ICs or within processor 810 as necessary. The demodulated, error corrected, and demultiplexed stream is provided to various processing elements, including, for example, processor 810, and encoder/decoder 830 operating in combination with the memory and storage elements to process the data stream as necessary for presentation on an output device.

Various elements of system 800 may be provided within an integrated housing, Within the integrated housing, the various elements may be interconnected and transmit data therebetween using suitable connection arrangement 815, for example, an internal bus as known in the art, including the I2C bus, wiring, and printed circuit boards.

The system 800 includes communication interface 850 that enables communication with other devices via communication channel 890. The communication interface 850 may include, but is not limited to, a transceiver configured to transmit and to receive data over communication channel 890. The communication interface 850 may include, but is not limited to, a modem or network card and the communication channel 890 may be implemented, for example, within a wired and/or a wireless medium.

Data is streamed to the system 800, in various embodiments, using a Wi-Fi network such as IEEE 802.11. The Wi-Fi signal of these embodiments is received over the communications channel 890 and the communications interface 850 which are adapted for Wi-Fi communications. The communications channel 890 of these embodiments is typically connected to an access point or router that provides access to outside networks including the Internet for allowing streaming applications and other over-the-top communications. Other embodiments provide streamed data to the system 800 using a set-top box that delivers the data over the HDMI connection of the input block 805. Still other embodiments provide streamed data to the system 800 using the RF connection of the input block 805.

The system 800 may provide an output signal to various output devices, including a display 865, speakers 875, and other peripheral devices 885. The other peripheral devices 885 include, in various examples of embodiments, one or more of a stand-alone DVR, a disk player, a stereo system, a lighting system, and other devices that provide a function based on the output of the system 800. In various embodiments, control signals are communicated between the system 800 and the display 865, speakers 875, or other peripheral devices 885 using signaling such as AV.Link, CEC, or other communications protocols that enable device- to-device control with or without user intervention. The output devices may be communicatively coupled to system 800 via dedicated connections through respective interfaces 860, 870, and 880. Alternatively, the output devices may be connected to system 800 using the communications channel 890 via the communications interface 850. The display 865 and speakers 875 may be integrated in a single unit with the other components of system 800 in an electronic device, for example, a television. In various embodiments, the display interface 860 includes a display driver, for example, a timing controller (T Con) chip.

The display 865 and speaker 875 may alternatively be separate from one or more of the other components, for example, if the RF portion of input 805 is part of a separate set-top box. In various embodiments in which the display 865 and speakers 875 are external components, the output signal may be provided via dedicated output connections, including, for example, HDMI ports, USB ports, or COMP outputs.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Moreover, the present aspects are not limited to MPEG, HEVC, or 1C protocols, and can be applied, for example, to other standards and recommendations, and extensions of any such standards and recommendations. Unless indicated otherwise, or technically precluded, the aspects described in this application can be used individually or in combination. Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment. Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of, for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways.

For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method of video coding, comprising:

   selecting, by a codec of a device, a block of pixels of a frame of video, the block having a width $W$ and a height $H$;
   identifying, by the codec, a plurality of control points along a first edge of the block of pixels;
   determining, by the codec, one or more pixels of a first portion of the block of pixels based on interpolations of a first control point of the plurality of control points along the first edge of the block of pixels with corresponding samples along a second edge of the block of pixels, the second edge orthogonal to the first edge; and
   determining, by the codec, one or more pixels of a second portion of the block of pixels different from the first portion based on interpolations of a second control point of the plurality of control points along the first edge of the block of pixels with corresponding samples along a third edge of the first portion of the block of pixels, the third edge parallel to the second edge.

2. The method of claim 1, wherein the interpolations of the first control point of the plurality of control points along the first edge of the block of pixels with corresponding samples along the second edge of the block of pixels comprise horizontal and vertical interpolations.

3. The method of any preceding claim, wherein the interpolations of the second control point of the plurality of control points along the first edge of the block of pixels with the corresponding samples along the third edge of the first portion of the block of pixels comprise horizontal and vertical interpolations.

4. The method of any preceding claim, wherein the corresponding samples along the third edge of the first portion of the block of pixels are within the first portion of the block of pixels and adjacent to the second portion of the block of pixels.

5. The method of any preceding claim, further comprising:

   identifying, by the codec, a plurality of control points along the second edge of the block of pixels;
   determining, by the codec, one or more pixels of a third portion of the block of pixels based on interpolations of a first control point of the plurality of control points along the second edge of the block of pixels with corresponding samples along the first edge of the block of pixels; and
   determining, by the codec, one or more pixels of a fourth portion of the block of pixels different from the third portion based on interpolations of a second control point of the plurality of control points along the second edge of the block of pixels with corresponding samples along a fourth edge of the third portion of the block of pixels, the fourth edge parallel to the first edge.

6. The method of claim 5, wherein the width $W$ of the block equals the height $H$ of the block, and wherein a number of the plurality of control points along the first edge of the block of pixels is equal to a number of the plurality of control points along the second edge of the block of pixels.

7. The method of any of claims 1 through 5, wherein the width W of the block exceeds the height H of the block, and wherein a number of the plurality of control points along the first edge of the block of pixels is proportional to a ratio of the width $W$ to the height $H$.

8. The method of any preceding claim, wherein determining the one or more pixels of the first portion of the block of pixels further comprises determining a weighted sum of a first interpolation and a second interpolation.

9. A video encoder or decoder configured to perform the method as in any one of claims 1-8.

10. A media consumption device configured to perform the method as in any one of claims 1-8.

11. At least one processor operatively connected to at least one transceiver, the at least one processor and at least one transceiver configured to perform the method as in any one of claims 1-8.

12. A network device configured to perform the method as in any one of claims 1-8.

13. A computing device configured to perform the method as in any one of claims 1-8.

14. An integrated circuit configured to perform the method as in any one of claims 1-8.

15. A non-transitory computer readable medium comprising instructions which when executed by a processing device cause the processing device to perform the method as in any one of claims 1-8.

Pre-encoding processing 101

Image partitioning 102

110

105

Transform 125

Quantization 130

Entropy coding 145

Inverse quantization 140

Inverse transform 150

155

Intra-prediction 160

In-loop filters 165

Reference picture buffer 180

Motion compensation 170

Motion estimation 175

100

FIG. 1

FIG. 2

FIG. 3

R(-1,-1)
308A

W 304

R(W,-1)
308B

R(x,-1)
312

314

H
306

R(-1,H)
308C

310

302

300A

R(-1,-1)
308A

W 304

R(W,-1)
308B

R(-1, y)
318

320

H
306

316

R(-1,H)
308C

302

300B

EP 4 625 982 A1

FIG. 4

FIG. 5A

EP 4 625 982 A1

FIG. 5B

W 604

W/4 605   W/4 605   W/4 605   W/4 605

R(-1,-1)
608A

R(W,-1)
608B

R(W/4,-1)
610A

R(W/2,-1)
610B

R(3W/4,-1)
610C

H/4 607

603A   603B   603C   603D

613A

613B

H/4 607

R(-1,H/4)
612A

603E   603F   603G   603H

H
606

H/4 607

R(-1,H/2)
612B

603I   603J   603K   603L

H/4 607

R(-1,3H/4)
612B

602

600

FIG. 6

603M   603N   603O   603P

R(-1,H)
708C

FIG. 7

FIG. 8

Europäisches
Patentamt

European
Patent Office

Office européen
des brevets

# EUROPEAN SEARCH REPORT

**Application Number**

EP 24 30 5437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PANUSOPONE (ARRIS) K ET AL: "Unequal Weight Planar Prediction and Constrained PDPC", 5. JVET MEETING; 20170112 - 20170120; GENEVA; (THE JOINT VIDEO EXPLORATION TEAM OF ISO/IEC JTC1/SC29/WG11 AND ITU-T SG.16 ), , no. JVET-E0068 13 January 2017 (2017-01-13), XP030247573, Retrieved from the Internet: URL:http://phenix.int-evry.fr/jvet/doc_end _user/documents/5_Geneva/wg11/JVET-E0068-v 3.zip JVET-E0068-r1.doc [retrieved on 2017-01-13] | 1-15 | INV. H04N19/119 H04N19/136 H04N19/176 H04N19/50 H04N19/593 |
| Y | * the whole document * | 1-15 | |
| Y | SANTIAGO DE LUXÁN HERNÁNDEZ ET AL: "CE3: Line-based intra coding mode (Tests 2.1.1 and 2.1.2)", JOINT VIDEO EXPLORATION TEAM OF ISO/IEC JTC1/SC29/WG11 AND ITU-T SG.16, , no. JVET-L0076 12 October 2018 (2018-10-12), pages 1-9, XP030194061, Retrieved from the Internet: URL:http://phenix.int-evry.fr/jvet/doc_end _user/documents/12_Macao/wg11/JVET-L0076-v 2.zip JVET-L0076_v2.docx [retrieved on 2018-09-30] * the whole document * | 1-15 | |
| Y | US 11 178 427 B2 (QUALCOMM INC [US]) 16 November 2021 (2021-11-16) * column 7, line 28 - column 8, line 61 * * column 10, line 48 - column 12, line 53 * | 1-15 | |

**TECHNICAL FIELDS SEARCHED (IPC)**

H04N

The present search report has been drawn up for all claims

| Place of search | Date of completion of the search | Examiner |
|---|---|---|
| The Hague | 2 September 2024 | André, Thomas |

EPO FORM 1503 03.82 (P04C01)

## ANNEX TO THE EUROPEAN SEARCH REPORT
## ON EUROPEAN PATENT APPLICATION NO.

EP 24 30 5437

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2024

| Patent document cited in search report | Publication date | Patent family member(s) | Publication date |
|---|---|---|---|
| US 11178427 B2 | 16-11-2021 | NONE | |